# EUROPÄISCHE PATENTSCHRIFT

(11) **EP 3 766 329 B1**
(45) Veröffentlichungstag und Bekanntmachung des Hinweises auf die Patenterteilung: **03.01.2024**
(21) Anmeldenummer: 20161945.9
(22) Anmeldetag: 10.03.2020
(51) Int. Cl.: A01D 57/04

(54) **LANDWIRTSCHAFTLICHE ERNTEMASCHINE**
AGRICULTURAL HARVESTING MACHINE
ENGIN D'ABATTAGE-FAÇONNAGE AGRICOLE

(30) Priorität: 15.07.2019 DE 102019119126
(43) Veröffentlichungstag der Anmeldung: 20.01.2021
(73) Patentinhaber: CLAAS Selbstfahrende Erntemaschinen GmbH, 33428 Harsewinkel (DE)
(72) Erfinder: Neitemeier, Dennis, 59510 Lippetal (DE); Baumgarten, Joachim, 48361 Beelen (DE); Wilken, Andreas, 49143 Bissendorf (DE); Bormann, Bastian, 33334 Gütersloh (DE); Spiekermann, Sebastian, 48346 Ostbevern (DE); Irmer, Daniel, 33442 Herzebock-Clarholz (DE)
(74) Vertreter: CLAAS Gruppe

(56) Entgegenhaltungen:
- EP-A1- 2 060 164
- EP-A1- 2 681 984
- EP-A1- 2 702 854
- EP-A1- 3 132 711
- DE-A1-102005 050 751

## Beschreibung

Die Erfindung betrifft eine landwirtschaftliche Erntemaschine mit einem als Erntevorsatz ausgebildeten Schneidwerk gemäß dem Oberbegriff von Anspruch 1.

Bei der in Rede stehenden landwirtschaftlichen Erntemaschine handelt es sich um jedwede Erntemaschine, die mit einem als Erntevorsatz ausgebildeten Schneidwerk zum Schneiden und Aufnehmen von Erntegut ausgestattet ist. Hierbei kann es sich um Mähdrescher, Feldhäcksler, Ballenpressen oder dergleichen handeln. Bei den vorliegenden Erläuterungen steht die als Mähdrescher ausgestaltete Erntemaschine im Vordergrund.

Der optimalen Einstellung des Schneidwerks einer landwirtschaftlichen Erntemaschine kommt insoweit besondere Bedeutung zu, als nicht nur das Schneidwerk selbst, sondern alle nachgelagerten Prozessstufen hiervon betroffen sind. Eine manuelle Einstellung der dem Schneidwerk zugeordneten Schneidwerksparameter ist angesichts einer Vielzahl, teilweise einander zuwiderlaufender Randbedingungen kaum möglich.

Die bekannte landwirtschaftliche Erntemaschine (EP 3 132 711 A1 oder EP 2 681 984 A1) von der die Erfindung ausgeht, ist hierfür mit einem Schneidwerksautomaten ausgestattet, der die betreffenden Schneidwerksparameter nach ausgewählten Ernteprozessstrategien kennfeldbasiert erzeugt. Dieses generische Konzept eines Schneidwerksautomaten bildet eine umfassende Grundlage für eine automatisierte oder teilautomatisierte Optimierung der Schneidwerksparameter. Die Eingangsparameter des bekannten Schneidwerksautomaten sind neben den Benutzereingaben die Sensorsignale einer Sensoranordnung, die ein Bestandssensorsystem zur Ermittlung von Bestandsparametern des Erntebestands und einen Schichthöhensensor zur Ermittlung des zeitlichen Schichthöhenverlaufs aufweist.

Eine Herausforderung bei der Auslegung des bekannten Schneidwerksautomaten besteht insbesondere darin, Durchsatzschwankungen, also Schwankungen im zeitlichen Schichthöhenverlauf, möglichst zu reduzieren. Der Grund hierfür besteht darin, dass solche Durchsatzschwankungen in den nachgelagerten Prozessstufen zu Verlusten führen.

Eine weitere Herausforderung bei der Auslegung des bekannten Schneidwerksautomaten besteht darin, unmittelbar am Schneidwerk entstehende Kornverluste weitestgehend zu verhindern.

Der Erfindung liegt das Problem zu Grunde, die bekannte landwirtschaftliche Erntemaschine derart auszugestalten und weiterzubilden, dass die Erzeugung der Schneidwerksparameter auf geringe Kornverluste hin optimiert wird.

Das obige Problem wird bei einer landwirtschaftlichen Erntemaschine gemäß dem Oberbegriff von Anspruch 1 durch die Merkmale des kennzeichnenden Teils von Anspruch 1 gelöst.

Der vorschlagsgemäßen Lösung liegt zunächst einmal die grundsätzliche Erkenntnis zu Grunde, dass eine aufeinander abgestimmte Einstellung von Schneidtischlänge, horizontaler Haspelposition und vertikaler Haspelposition eine notwendige Voraussetzung für die Vermeidung von am Schneidwerk selbst auftretenden Kornverlusten ist. Dies betrifft insbesondere die Abstimmung der horizontalen Haspelposition auf die Schneidtischlänge derart, dass ein horizontales Hinausragen der Haspel über den Schneidtisch nicht auftritt. Ein solches Hinausragen würde dazu führen, dass Körner vor den Schneidwerkstisch fallen, den Schrägförderer nicht erreichen und damit vom Fahrzeugbediener nicht registrierbare Verluste entstehen.

Vorschlagsgemäß ist weiter erkannt worden, dass sich am Schneidwerk Schwingungseffekte ergeben, die sich über den Transportstrom des Ernteguts fortsetzen. Diese Schwingungseffekte gehen darauf zurück, dass sich am Schneidwerk je nach Einstellung der Schneidwerksparameter periodische Stauungseffekte insbesondere eingangsseitig der Einzugsschnecke ergeben, die zu resultierenden Schwingungen im zeitlichen Schichthöhenverlauf führen. Angesichts der Tatsache, dass es sich beim Schneiden und Aufnehmen von Erntegut mittels des Schneidwerks um einen komplexen Prozess mit zahlreichen potentiellen Schwingungserregern handelt, kann sich die Schwingung des zeitlichen Schichthöhenverlaufs über verschiedene Schwingungsfrequenzen oder ganze Schwingungsfrequenzbereiche erstrecken.

Vorschlagsgemäß ist schließlich erkannt worden, dass sich die Schwingungen im zeitlichen Schichthöhenverlauf maßgeblich über eine Veränderung der Schneidtischlänge beeinflussen lassen. Entsprechend wird zumindest für die Erzeugung der Schneidtischlänge eine Schwingungsanalyse des zeitlichen Schichthöhenverlaufs vorgeschlagen.

Mit der gleichzeitigen und aufeinander abgestimmten Einstellung von Schneidtischlänge, horizontaler Haspelposition und vertikaler Haspelposition und der unter schwingungstechnischen Gesichtspunkten optimierbaren Erzeugung der Schneidtischlänge ergibt sich ein neues Potential für die Reduzierung von Kornverlusten nicht nur im Schneidwerk selbst, sondern auch in den nachgelagerten Prozessstufen.

Erfindungsgemäß wird vorgeschlagen, dass die Rechenvorrichtung zur Umsetzung einer Ernteprozessstrategie im laufenden Erntebetrieb basierend auf einer Signalauswertung der Sensorsignale der Sensoranordnung gleichzeitig zumindest die Schneidwerksparameter der Schneidtischlänge, der horizontalen Haspelposition und der vertikalen Haspelposition aufeinander abgestimmt erzeugt und dem Schneidwerk vorgibt und dass die Signalauswertung zumindest für die Erzeugung der Schneidtischlänge eine Schwingungsanalyse des zeitlichen Schichthöhenverlaufs umfasst.

Mit der besonders bevorzugten Ausgestaltung gemäß Anspruch 2 wird die Ernteprozessstrategie durch die Minimierung vorbestimmter Schwingungsanteile im zeitlichen Schichthöhenverlauf definiert. Eine besonders einfache Umsetzung hierfür ergibt sich gemäß Anspruch 3, in dem die vorschlagsgemäße Schwingungsanalyse die Erzeugung eines Schwingungskoeffizienten eines Schwingungsanteils im zeitlichen Schichthöhenverlauf für eine vorbestimmte Schwingungsfrequenz oder einen vorbestimmten Schwingungsfrequenzbereich umfasst. Der Schwingungskoeffizient ist ein Indiz dafür, welcher Anteil des zeitlichen Schichthöhenverlaufs auf die vorbestimmte Schwingungsfrequenz bzw. den vorbestimmten Schwingungsfrequenzbereich entfällt. Der Schwingungskoeffizient entspricht vom Grundsatz her dem Begriff des Fourier-Koeffizienten, sofern es sich bei der Schwingungsanalyse um eine Fourier-Analyse handelt.

Vorzugsweise ist die vorschlagsgemäße Schwingungsanalyse des zeitlichen Schichthöhenverlaufs eine Fourier-Analyse, so dass der Schwingungskoeffizient vom Grundsatz einem Fourier-Koeffizienten entspricht. Grundsätzlich sind aber alle anderen mathematischen Methoden der Schwingungsanalyse anwendbar.

Versuche haben gezeigt, dass sich die hier in Rede stehenden Schwingungsfrequenzen im Bereich weniger Hz bewegen, wie gemäß Anspruch 4 klargestellt wird.

Die weiter bevorzugten Ausgestaltungen gemäß den Ansprüchen 5 bis 7 betreffen eine kennlinienbasierte Erzeugung der Schneidwerksparameter, insbesondere der Schneidtischlänge, was die Umsetzung der Minimierung eines oben angesprochenen Schwingungsanteils mit vergleichsweise geringem Rechenaufwand ermöglicht.

Die ebenfalls bevorzugten Ausgestaltungen gemäß den Ansprüchen 8 bis 11 betreffen Einzelheiten zur Einstellung der Haspelposition, die vorschlagsgemäß auf die Schneidtischlänge abgestimmt wird, wodurch sich die unmittelbar am Schneidwerk entstehenden Kornverluste wirksam reduzieren lassen.

Im Folgenden wird die Erfindung anhand einer lediglich ein Ausführungsbeispiel darstellenden Zeichnung näher erläutert. In der Zeichnung zeigt
- Fig. 1: eine vorschlagsgemäße landwirtschaftliche Erntemaschine in Seitenansicht und
- Fig. 2: eine schematische Darstellung eines Fahrerassistenzsystems einer vorschlagsgemäßen Erntemaschine gemäß Fig. 1.

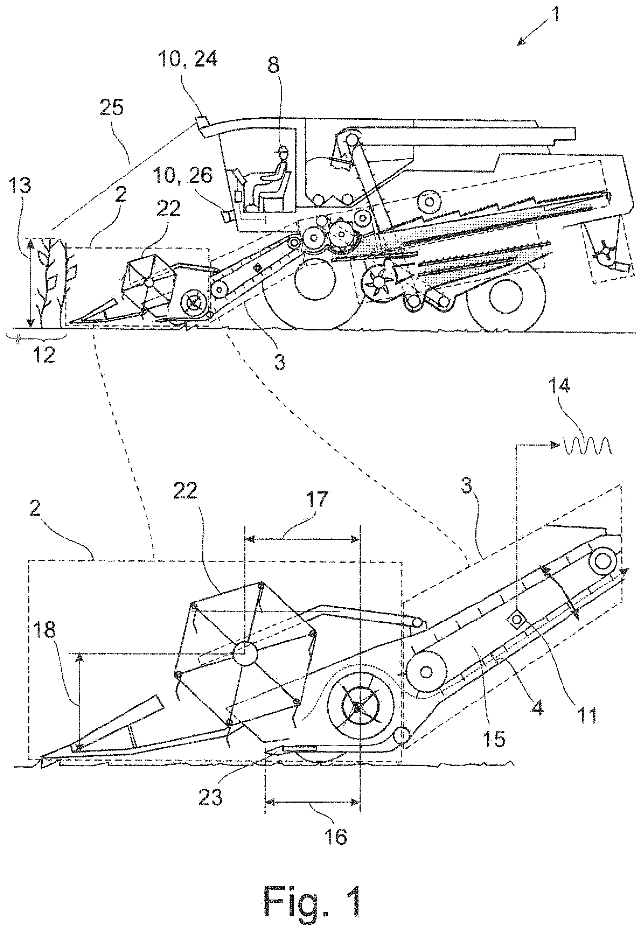

Eine vorschlagsgemäße, hier und vorzugsweise als Mähdrescher ausgestaltete, landwirtschaftliche Erntemaschine 1 weist ein als Erntevorsatz ausgebildetes Schneidwerk 2 zum Schneiden und Aufnehmen von Erntegut auf. Das Schneidwerk 2 ist vorzugsweise austauschbar gegen ein anderes Schneidwerk 2, so dass die Erntemaschine 1 auf das Ernten unterschiedlicher Fruchtarten angepasst werden kann. Unter dem Erntegut ist dabei das gesamte vom Feldbestand über das Schneidwerk 2 aufgenommene Material zu verstehen. Wie in Fig. 1 zu erkennen ist, wird ein Feldbestand durch das Schneidwerk 2 gemäht und das somit gewonnene Erntegut einem Schrägförderer 3 zugeführt. Das Erntegut durchläuft den Schrägförderer 3 mit einer Schichthöhe 4, wobei der momentane Wert der Schichthöhe 4 dem momentanen Wert des Gutdurchsatzes entspricht. Demnach stellt sich in dem Schrägförderer 3 ein zeitlicher Schichthöhenverlauf 14 ein, der jedwede Änderung im Gutdurchsatz repräsentiert.

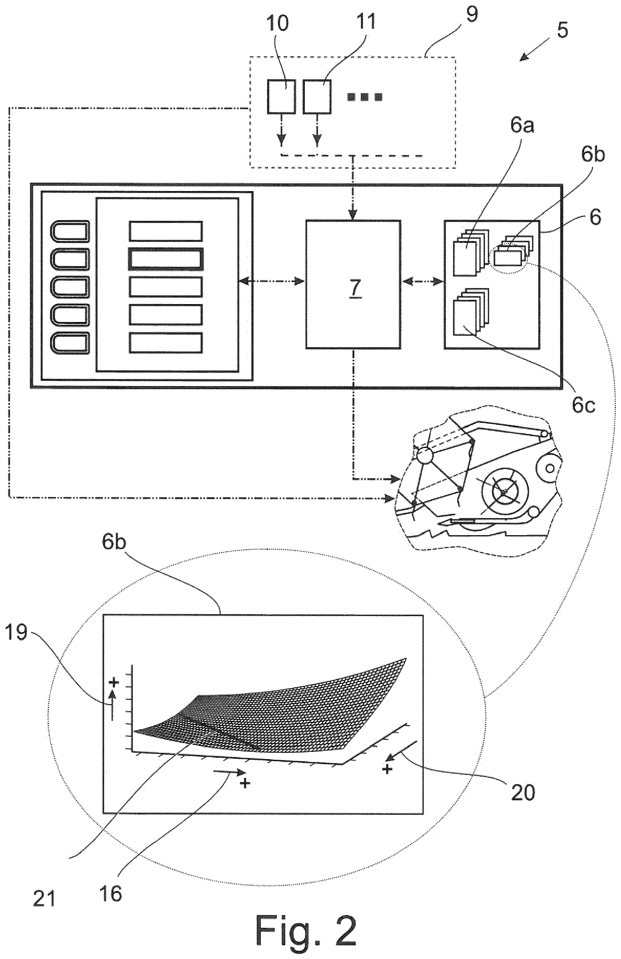

Die vorschlagsgemäße Erntemaschine 1 weist ferner ein Fahrerassistenzsystem 5 zur Ansteuerung des Schneidwerks 2 auf. Dieses Fahrerassistenzsystem 5 umfasst einen Speicher 6 zum Hinterlegen von Daten - also einen Speicher im informationstechnischen Sinne - und eine Rechenvorrichtung 7 zur Verarbeitung der in dem Speicher 6 hinterlegten Daten. Grundsätzlich ist das Fahrerassistenzsystem 5 dazu eingerichtet, einen Fahrer 8 der Erntemaschine 1 bei der Bedienung der Erntemaschine 1 zu unterstützen. Das Fahrerassistenzsystem 5 mit dem Speicher 6 und der Rechenvorrichtung 7 ist schematisch in Fig. 2 gezeigt.

Das Fahrerassistenzsystem 5 weist neben der Rechenvorrichtung 7 eine Sensoranordnung 9 auf, deren Sensorsignale vom Fahrerassistenzsystem 5 zur Ansteuerung des Schneidwerks 2 benutzt werden. Die Sensoranordnung 9 kann über eine Mehrzahl von Sensoren bzw. Sensorsystemen verfügen. Vorschlagsgemäß weist die Sensoranordnung 9 zumindest ein Bestandssensorsystem 10 und einen Schichthöhensensor 11 auf.

Das Bestandssensorsystem 10 dient der Ermittlung von Bestandsparametern insbesondere in einem Vorfeldbereich 12 der Erntemaschine 1. Bei den Bestandsparametern kann es sich beispielsweise um die die Bestandshöhe 13 handeln, wie noch gezeigt wird.

Der Schichthöhensensor 11 dient der Ermittlung des zeitlichen Schichthöhenverlaufs 14 betreffend die oben angesprochene Schichthöhe 4 im Schrägförderer 3. Bei dem dargestellten und insoweit bevorzugten Ausführungsbeispiel weist der Schrägförderer 3 eine auslenkbare Schichthöhenwalze 15 auf, deren Auslenkung ein Maß für die momentane Schichthöhe 4 im Schrägförderer 3 ist. Der zeitliche Schichthöhenverlauf 14 entspricht also dem Sensorsignal des Schichthöhensensors 11, der die Auslenkung der Schichthöhenwalze 15 überwacht.

Das Schneidwerk 2 bildet zusammen mit dem Fahrerassistenzsystem 5 einen Schneidwerksautomaten. Dies ist vorzugsweise dadurch realisiert, dass im Speicher 6 eine Mehrzahl auswählbarer Ernteprozessstrategien 6a hinterlegt sind und dass die Rechenvorrichtung 7 dazu eingerichtet ist, zur Umsetzung der ausgewählten Ernteprozessstrategie 6a bzw. der Ernteprozessstrategien 6a mindestens einen Schneidwerksparameter für das Schneidwerk 2 autonom zu erzeugen und dem Schneidwerk 2 vorzugeben. Hinsichtlich der grundsätzlichen Funktionsweise eines solchen Schneidwerksautomaten darf auf die europäische Patentanmeldung EP 3 132 711 A1 verwiesen werden.

Wesentlich ist nun, dass die Rechenvorrichtung 7 zur Umsetzung der betreffenden Ernteprozessstrategie 6a im laufenden Erntebetrieb basierend auf einer Signalauswertung der Sensorsignale der Sensoranordnung 9 gleichzeitig zumindest die Schneidwerksparameter der Schneidtischlänge 16, der horizontalen Haspelposition 17 und der vertikalen Haspelposition 18 aufeinander abgestimmt erzeugt und dem Schneidwerk 2 vorgibt. Es wurde weiter oben erläutert, dass sich mit dieser Maßnahme bereits besonders geringe Kornverluste im Schneidwerk 2 und in den nachgelagerten Prozessstufen erzielen lassen. Die Abstimmung der Haspelposition auf die Schneidtischlänge 16 wird weiter unten am Beispiel der horizontalen Haspelposition 17 näher erläutert.

Wesentlich ist weiter, dass die Signalauswertung zumindest für die Erzeugung der Schneidtischlänge 16 eine Schwingungsanalyse des zeitlichen Schichthöhenverlaufs 14 umfasst. Es wurde ebenfalls weiter oben erläutert, dass sich die im zeitlichen Schichthöhenverlauf 14 enthaltenen Schwingungsanteile maßgeblich durch die Schneidtischlänge 16 einstellen lassen.

Beide oben genannten Maßnahmen ermöglichen zusammengenommen außerordentlich geringe Kornverluste sowie eine Vergleichmäßigung des Gutdurchsatzes, wobei der letztgenannte Aspekt wiederum zu einer Reduzierung der Kornverluste in den dem Schneidwerk 2 nachgelagerten Prozessschritten führt.

Es darf darauf hingewiesen werden, dass für die sensorbasierte Ermittlung des zeitlichen Schichthöhenverlaufs 14 neben der Verwendung einer oben angesprochenen Schichthöhenwalze 15 andere Sensoren denkbar sind. Beispielsweise ist eine berührungslose Ermittlung der Schichthöhe 4 denkbar.

Vorzugsweise betrifft die Ernteprozessstrategie 6a die Minimierung von Schwingungsanteilen im zeitlichen Schichthöhenverlauf 14 für eine vorbestimmte Schwingungsfrequenz oder einen vorbestimmten Schwingungsfrequenzbereich. Angesichts der obigen Maßgeblichkeit der Schneidtischlänge 16 wird in diesem Zusammenhang vorgeschlagen, dass die Rechenvorrichtung 7 zur Umsetzung dieser Ernteprozessstrategie 6a zumindest die Schneidtischlänge 16 erzeugt und dem Schneidwerk 2 vorgibt.

Die Erzeugung der Schneidtischlänge 16 derart, dass der betreffende Schwingungsanteil im zeitlichen Schichthöhenverlauf 14 minimiert wird, lässt sich rechnerisch besonders einfach umsetzen. Hierfür umfasst die Schwingungsanalyse zunächst die Erzeugung eines Schwingungskoeffizienten 19 eines Schwingungsanteils im zeitlichen Schichthöhenverlauf 14 für eine vorbestimmte Stimmungsfrequenz oder einen vorbestimmten Schwingungsfrequenzbereich. Der Schwingungskoeffizient 19 repräsentiert gewissermaßen die Stärke des betreffenden Schwingungsanteils im zeitlichen Schichthöhenverlauf 14 und kann grundsätzlich ein Fourier-Koeffizient sein, wie weiter oben angesprochen. Dann ist es weiter vorzugsweise so, dass die Ernteprozessstrategie 6a eine Minimierung des Schwingungskoeffizienten 19 umfasst, wobei die Rechenvorrichtung 7 wiederum zur Umsetzung der Ernteprozessstrategie 6a zumindest die Schneidtischlänge 16 erzeugt und dem Schneidwerk 2 vorgibt. Es ist also lediglich eine Schneidtischlänge 16 zu wählen, die einem Minimum des Schwingungskoeffizienten 19 entspricht.

Die oben angesprochene, vorbestimmte Schwingungsfrequenz oder der vorbestimmte Schwingungsfrequenzbereich liegt vorzugsweise zwischen 0,5 Hz und 10 Hz, insbesondere zwischen 1,0 Hz und 5 Hz.

Insbesondere die Minimierung des Schwingungskoeffizienten 19 lässt sich vorzugsweise dadurch realisieren, dass in der Rechenvorrichtung 7 mindestens ein Kennlinienfeld 6b zur Abbildung des funktionalen Zusammenhangs zwischen dem Schwingungskoeffizienten 19, der Schneidtischlänge 16 und einem Gutdurchsatzwert 20 gespeichert ist. Dabei wird zumindest die Schneidtischlänge 16 basierend auf dem Kennlinienfeld 6b erzeugt. Ein solches Kennlinienfeld 6b ist der Detaildarstellung gemäß Fig. 2 zu entnehmen. Dabei ist der Gutdurchsatzwert 20 ein zeitlich gemittelter Gutdurchsatz, der weiter vorzugsweise von den Sensorsignalen des Schichthöhensensors 11 abgeleitet wird. Hier können ganz verschiedene Mittelungsverfahren Anwendung finden.

Die Detaildarstellung gemäß Fig. 2 zeigt, dass nach dem Kennlinienfeld 6b der Schwingungskoeffizient 19 beim Durchlaufen des Schneidtischlängen-Verstellbereichs für zumindest einen Teilbereich von Gutdurchsatzwerten 20 ein Minimum durchläuft. Entsprechend lässt sich die oben angesprochene Ernteprozessstrategie 6a der Minimierung des Schwingungskoeffizienten 19 ohne aufwändige Berechnung umsetzen. Entsprechend ist in dieser Detaildarstellung eine Optimallinie 21 eingetragen, die im Hinblick auf die Minimierung des Schwingungskoeffizienten 19 optimale Arbeitspunkte bereitstellt.

Der besondere Vorteil der Anwendung einer Kennfeldsteuerung besteht darin, dass zur Umsetzung der Ernteprozessstrategie 6a keine Regelung mit einem trägen Regelverhalten Anwendung finden muss, sondern dass die Rechenvorrichtung 7 zur Umsetzung der Ernteprozessstrategie 6a nach Art einer Steuerung arbeitet und den jeweiligen Wert für die optimale Schneidtischlänge 16 iterationsfrei und unmittelbar aus dem Kennlinienfeld 6b extrahiert. Um sicherzustellen, dass das Kennlinienfeld 6b dem tatsächlichen funktionalen Zusammenhang zwischen den beteiligten Größen Rechnung trägt, ist es vorzugsweise vorgesehen, dass die Rechenvorrichtung 7 das Kennlinienfeld 6b im laufenden Erntebetrieb auf die Sensorsignale der Sensoranordnung 9 abgleicht. Dabei bildet den Anfangszustand des Kennlinienfeldes 6b vorzugsweise ein in der Rechenvorrichtung 7 hinterlegtes Initialkennfeld 6c. Hinsichtlich des grundsätzlichen Einsatzes von Kennlinienfeldern im vorliegenden Zusammenhang darf wiederum auf die europäische Patentanmeldung EP 3 132 711 A1 verwiesen werden.

Es wurde weiter oben bereits angesprochen, dass die Haspelposition auf die Schneidtischlänge 16 abgestimmt erzeugt wird. Bezogen auf die horizontale Haspelposition 17 bedeutet dies, dass sich die horizontale Haspelposition 17 in einem vorbestimmten, hier und vorzugsweise linearen, Zusammenhang aus der Schneidtischlänge 16 ergibt. Damit soll vorzugsweise erreicht werden, dass die Haspel 22 vorbehaltlich eines gegebenenfalls vorgesehenen Offset-Werts senkrecht über dem Messerbalken 23 des Schneidwerks 2 steht. Damit lässt sich vermeiden, dass mittels der Haspel 22 Körner vor dem Schnitt aus dem Bestand herausgestrichen werden.

Für die Erzeugung der vertikalen Haspelposition 18 lassen sich verschiedene Strategien anwenden.

Hier und vorzugsweise ist es so, dass das Bestandssensorsystem 10 einen Bestandshöhensensor 24 zur Messung der Bestandshöhe 13 im Vorfeldbereich der Erntemaschine 1 aufweist, wobei die Rechenvorrichtung 7 aus den Sensorsignalen des Bestandshöhensensors 24 eine Bestandshöhenkarte für den Vorfeldbereich 12 der Erntemaschine 1 erzeugt und die vertikale Haspelposition 18 basierend auf der Bestandshöhenkarte erzeugt. Dabei ist es im einfachsten Fall vorgesehen, dass für die Erzeugung der vertikalen Haspelposition ein linearer Zusammenhang zu der gemessenen Bestandhöhe 13 herangezogen wird.

Für den Bestandshöhensensor 24 lassen sich zahlreiche unterschiedliche Sensoren anwenden. Bei dem dargestellten und insoweit bevorzugten Ausführungsbeispiel handelt es sich bei dem Bestandshöhensenor 24 um einen Abstandssensor, insbesondere um einen laserbasierten Abstandssensor. In besonders bevorzugter Ausgestaltung kommt für den Bestandshöhensenor 14 ein Laserscanner zur Anwendung, der mit einer Scanebene 25 in einem Winkel auf den Erntebestand im Vorfeldbereich 12 der Erntemaschine 1 trifft. Zusätzlich zu dem obigen Bestandshöhensensor 24 können weitere Sensoren der Sensoranordnung 9 zur Anwendung kommen. Insbesondere kann es vorteilhaft sein, dass das Bestandssensorsystem 10 mindestens einen Kamerasensor 26 aufweist, wobei die Rechenvorrichtung 7 die Höhenkarte vorzugsweise basierend auf den Sensorsignalen des Kamerasensors erweitert. Dies kann beispielhaft sein, um im Vorfeldbereich 12 befindliches Lagergetreide daraufhin zu überprüfen, wie das Lagergetreide ausgerichtet ist, um Optimierungsmaßnahmen durch eine entsprechende Einstellung der Schneidwerksparameter treffen zu können.

Es darf noch darauf hingewiesen werden, dass die Bestandshöhe 13 in der Zeichnung zwar als Strecke mit Bezug auf den Feldboden dargestellt worden ist.

Bei der Bestandshöhe 13 kann es sich aber auch um eine Relativgröße handeln, beispielsweise derart, dass die Bestandshöhe als eine Änderung der Höhe des Bestands entlang der Arbeitsrichtung der Erntemaschine 1 definiert ist. Grundsätzlich kann die Bestandshöhe 13 in jeglicher Einheit, beispielsweise auch in Maschinenkoordinaten angegeben sein, soweit diese die Bestandshöhe 13 im obigen Sinne repräsentieren.

Es darf ferner darauf hingewiesen werden, dass die Ermittlung der Bestandshöhe 13 nicht nur in einer Scanebene 25 erfolgen muss, sondern in mehreren Scanebenen erfolgen kann, die vorzugsweise in unterschiedlichen Winkeln auf den Erntebestand im Vorfeldbereich 12 der Erntemaschine 1 treffen.

Es darf abschließend darauf hingewiesen werden, dass die hier vorgeschlagene Lösung nur einen Teilbereich der Ansteuerung der Erntemaschine 1 und insbesondere des Schneidwerks 2 betrifft. Insbesondere ist zu berücksichtigen, dass neben den oben genannten Schneidwerksparametern weitere Schneidwerksparameter wie Messerarbeitshöhe, Schnittwinkel, Drehzahl der Einzugsschnecke, Drehzahl der Haspel, Schnittfrequenz oder dergleichen existieren, die ebenfalls in optimaler Weise einzustellen sind. Insoweit ist es vorgesehen, dass die hier vorgeschlagene Lösung mit weiteren Lösungen zur Einstellung der übrigen Schneidwerksparameter kombiniert wird.

### Bezugszeichenliste

- 1: Erntemaschine
- 2: Schneidwerk
- 3: Schrägförderer
- 4: Schichthöhe
- 5: Fahrerassistenzsystem
- 6: Speicher
- 7: Rechenvorrichtung
- 8: Fahrer
- 9: Sensoranordnung
- 10: Bestandssensorsystem
- 11: Schichthöhensensor
- 12: Vorfeldbereich
- 13: Bestandhöhe
- 14: Schichthöhenverlauf
- 15: Schichthöhenwalze
- 16: Schneidtischlänge
- 17: horizontale Haspelposition
- 18: vertikale Haspelposition
- 19: Schwingkoeffizient
- 20: Gutdurchsatzwert
- 21: Optimallinie
- 22: Haspel
- 23: Messerbalken
- 24: Bestandshöhensensor
- 25: Scanebene
- 26: Kamerasensor

## Patentansprüche

1. Landwirtschaftliche Erntemaschine (1) mit einem als Erntevorsatz ausgebildeten Schneidwerk (2) zum Schneiden und Aufnehmen von Erntegut eines Erntebestands, mit einem dem Schneidwerk (2) nachgeschalteten Schrägförderer (3), in dem sich ein zeitlicher Schichthöhenverlauf einstellt, und mit einem Fahrerassistenzsystem (5) zur Ansteuerung zumindest des Schneidwerks (2), wobei das Fahrerassistenzsystem (5) eine Rechenvorrichtung (7) sowie eine Sensoranordnung (9) mit einem Bestandssensorsystem (10) zur Ermittlung von Bestandsparametern des Erntebestands und einem Schichthöhensensor (11) zur Ermittlung des zeitlichen Schichthöhenverlaufs (14) aufweist,
**dadurch gekennzeichnet,**
**dass** die Rechenvorrichtung (7) zur Umsetzung einer Ernteprozessstrategie (6a) im laufenden Erntebetrieb basierend auf einer Signalauswertung der Sensorsignale der Sensoranordnung (9) gleichzeitig zumindest die Schneidwerksparameter der Schneidtischlänge (16), der horizontalen Haspelposition (17) und der vertikalen Haspelposition (18) aufeinander abgestimmt erzeugt und dem Schneidwerk (2) vorgibt und dass die Signalauswertung zumindest für die Erzeugung der Schneidtischlänge (16) eine Schwingungsanalyse des zeitlichen Schichthöhenverlaufs (14) umfasst.

2. Landwirtschaftliche Erntemaschine nach Anspruch 1, **dadurch gekennzeichnet, dass** die Ernteprozessstrategie (6a) die Minimierung von Schwingungsanteilen im zeitlichen Schichthöhenverlauf (14) für eine vorbestimmte Schwingungsfrequenz oder einen vorbestimmten Schwingungsfrequenzbereich betrifft und dass die Rechenvorrichtung (7) zur Umsetzung dieser Ernteprozessstrategie (6a) zumindest die Schneidtischlänge (16) erzeugt und dem Schneidwerk (2) vorgibt.

3. Landwirtschaftliche Erntemaschine nach einem der vorhergehenden Ansprüche, **dadurch gekennzeichnet, dass** die Schwingungsanalyse die Ermittlung eines Schwingungskoeffizienten (19) eines Schwingungsanteils im zeitlichen Schichthöhenverlauf (14) für eine vorbestimmte Schwingungsfrequenz oder einen vorbestimmten Schwingungsfrequenzbereich umfasst, vorzugsweise, dass die Ernteprozessstrategie (6a) eine Minimierung des Schwingungskoeffizienten (19) umfasst dass die Rechenvorrichtung (7) zur Umsetzung dieser Ernteprozessstrategie (6a) zumindest die Schneidtischlänge (16) erzeugt und dem Schneidwerk (2) vorgibt.

4. Landwirtschaftliche Erntemaschine nach Anspruch 2 oder 3, **dadurch gekennzeichnet, dass** die vorbestimmte Schwingungsfrequenz oder der vorbestimmte Schwingungsfrequenzbereich zwischen 0,5 Hz und 10 Hz, insbesondere zwischen 1,0 Hz und 5 Hz, liegt.

5. Landwirtschaftliche Erntemaschine nach Anspruch 3 und ggf. nach Anspruch 4, **dadurch gekennzeichnet, dass** in der Rechenvorrichtung (7) mindestens ein Kennlinienfeld (6b) zur Abbildung des funktionalen Zusammenhangs zwischen dem Schwingungskoeffizienten (19), der Schneidtischlänge (16) und einem Gutdurchsatzwert (20) gespeichert ist und dass zumindest die Schneidtischlänge (16) basierend auf dem Kennlinienfeld (6b) erzeugt wird, vorzugsweise, dass der Gutdurchsatzwert (20) ein zeitlich gemittelter Gutdurchsatz ist.

6. Landwirtschaftliche Erntemaschine nach Anspruch 5, **dadurch gekennzeichnet, dass** nach dem Kennlinienfeld (6b) der Schwingungskoeffizient (19) beim Durchlaufen des Schneidtischlängen-Verstellbereichs für zumindest einen Teilbereich von Gutdurchsatzwerten (20) ein Minimum durchläuft.

7. Landwirtschaftliche Erntemaschine nach Anspruch 5 oder 6, **dadurch gekennzeichnet, dass** die Rechenvorrichtung (7) das Kennlinienfeld (6b) im laufenden Erntebetrieb auf die Sensorsignale der Sensoranordnung (9) abgleicht, vorzugsweise, dass den Anfangszustand des Kennlinienfeldes (6b) ein in der Rechenvorrichtung (7) hinterlegtes Initialkennfeld (6c) bildet.

8. Landwirtschaftliche Erntemaschine nach einem der vorhergehenden Ansprüche, **dadurch gekennzeichnet, dass** die Rechenvorrichtung (7) die horizontale Haspelposition (17) derart abgestimmt auf die Schneidtischlänge (16) erzeugt, dass sich die horizontale Haspelposition (17) in einem vorbestimmten, insbesondere linearen, Zusammenhang aus der Schneidtischlänge (16) ergibt.

9. Landwirtschaftliche Erntemaschine nach einem der vorhergehenden Ansprüche, **dadurch gekennzeichnet, dass** das Bestandssensorsystem (10) einen Bestandshöhensensor (24) zur Messung der Bestandshöhe (13) im Vorfeldbereich (12) der Erntemaschine (1) aufweist und dass die Rechenvorrichtung (7) aus den Sensorsignalen des Bestandshöhensensors (24) eine Bestandshöhenkarte für den Vorfeldbereich (12) der Erntemaschine (1) erzeugt und die vertikale Haspelposition (18) basierend auf der Bestandshöhenkarte erzeugt.

10. Landwirtschaftliche Erntemaschine nach Anspruch 9, **dadurch gekennzeichnet, dass** der Bestandshöhensensor (24) ein Abstandssensor, insbesondere ein laserbasierter Abstandssensor, weiter vorzugsweise ein Laserscanner, ist.

11. Landwirtschaftliche Erntemaschine nach einem der vorhergehenden Ansprüche, **dadurch gekennzeichnet, dass** das Bestandssensorsystem (10) mindestens einen Kamerasensor (26) aufweist und dass die Rechenvorrichtung (7) die Höhenkarte basierend auf den Sensorsignalen des Kamerasensors (26) erweitert.

## Claims

1. An agricultural harvesting machine (1) with a cutting assembly (2) configured as a harvester header for cutting and picking up harvested material of a field crop for harvesting, with an inclined conveyor (3) downstream of the cutting assembly (2), in which a temporal layer height profile is set up, and with a driver assistance system (5) for controlling at least the cutting assembly (2), wherein the driver assistance system (5) has a computing device (7) as well as a sensor assembly (9) with a field crop sensor system (10) for determining field crop parameters of the field crop for harvesting and a layer height sensor (11) for determining the temporal layer height profile (14),
**characterized in that**
in order to implement a harvesting process strategy (6a) in an ongoing harvesting operation, based on a signal evaluation of the sensor signals from the sensor assembly (9), the computing device (7) simultaneously generates at least the cutting assembly parameter of the cutting table length (16), the horizontal reel position (17) and the vertical reel position (18) in a coordinated manner and provides them to the cutting assembly (2), and **in that** at least for the generation of the cutting table length (16), the signal evaluation comprises a vibration analysis of the temporal layer height profile (14).

2. The agricultural harvesting machine according to claim 1, **characterized in that** the harvesting process strategy (6a) concerns the minimization of vibration components in the temporal layer height profile (14) for a predetermined vibration frequency or a predetermined vibration frequency range, and **in that** in order to implement this harvesting process strategy (6a), the computing device (7) generates at least the cutting table length (16) and provides it to the cutting assembly (2).

3. The agricultural harvesting machine according to one of the preceding claims, **characterized in that** the vibration analysis comprises the determination of a vibration coefficient (19) of a vibration component in the temporal layer height profile (14) for a predetermined vibration frequency or a predetermined vibration frequency range, preferably **in that** the harvesting process strategy (6a) comprises a minimization of the vibration coefficients (19), **in that**, in order to implement this harvesting process strategy (6a), the computing device (7) generates at least the cutting table length (16) and provides it to the cutting assembly (2).

4. The agricultural harvesting machine according to claim 2 or claim 3, **characterized in that** the predetermined vibration frequency or the predetermined vibration frequency range is between 0.5 Hz and 10 Hz, in particular between 1.0 Hz and 5 Hz.

5. The agricultural harvesting machine according to claim 3 and, if appropriate, according to claim 4, **characterized in that** at least one performance map (6b) for representing the functional relationship between the vibration coefficients (19), the cutting table length (16) and a material throughput value (20) is stored in the computing device (7), and **in that** at least the cutting table length (16) is generated on the basis of the performance map (6b), preferably **in that** the material throughput value (20) is a temporally averaged material throughput.

6. The agricultural harvesting machine according to claim 5, **characterized in that** according to the performance map (6b), when passing through the cutting table length adjustment range, the vibration coefficient (19) passes through a minimum for at least a sub-section of material throughput values.

7. The agricultural harvesting machine according to claim 5 or claim 6, **characterized in that** during an ongoing harvesting operation, the computing device (7) compares the performance map (6b) with the sensor signals from the sensor assembly (9), preferably **in that** the initial state of the performance map (6b) forms an initial characteristic diagram (6c) which is stored in the computing device (7).

8. The agricultural harvesting machine according to one of the preceding claims, **characterized in that** the computing device (7) generates the horizontal reel position (17) which is coordinated with the cutting table length (16) in a manner such that the horizontal reel position (17) results from the cutting table length (16) in a predetermined, in particular linear relationship.

9. The agricultural harvesting machine according to one of the preceding claims, **characterized in that** the field crop sensor system (10) has a field crop height sensor (24) for measuring the field crop height (13) in the frontal region (12) of the harvesting machine (1) and **in that** the computing device (7) generates a field crop height map for the frontal region (12) of the harvesting machine (1) from the sensor signals from the field crop height sensor (24) and generates the vertical reel position (18) based on the field crop height map.

10. The agricultural harvesting machine according to claim 9, **characterized in that** the field crop height sensor (24) is a distance sensor, in particular a laser-based distance sensor, more preferably a laser scanner.

11. The agricultural harvesting machine according to one of the preceding claims, **characterized in that** the field crop sensor system (10) has at least one camera sensor (26) and **in that** the computing device (7) enhances the height map on the basis of the sensor signals from the camera sensor (26).

## Revendications

1. Machine de récolte agricole (1) avec un dispositif de coupe (2) réalisé comme outil frontal de récolte pour la coupe et la réception de produit de récolte d'une culture à récolter, avec un convoyeur incliné (3) monté en aval du dispositif de coupe (2), dans lequel une étendue de hauteur de couche temporelle se règle, et avec un système d'assistance au conducteur (5) pour la commande au moins du dispositif de coupe (2),
dans lequel le système d'assistance au conducteur (5) présente un dispositif de calcul (7) ainsi qu'un agencement capteur (9) avec un système de capteur de culture (10) pour le calcul de paramètres de culture de la culture à récolter et un capteur de hauteur de couche (11) pour le calcul de l'étendue de hauteur de couche (14) temporelle,
**caractérisée en ce que**
le dispositif de calcul (7) génère de manière adaptée les uns aux autres pour la mise en œuvre d'une stratégie de processus de récolte (6a) dans le mode de récolte en cours sur la base d'une évaluation de signal des signaux de capteur de l'agencement capteur (9) simultanément au moins les paramètres du dispositif de coupe de la longueur de table de coupe (16), de la position de rabatteur (17) horizontale et de la position de rabatteur (18) verticale et les spécifie au dispositif de coupe (2) et que l'évaluation de signal comporte au moins pour la génération de la longueur de table de coupe (16) une analyse d'oscillation de l'étendue de hauteur de couche (14) temporelle.

2. Machine de récolte agricole selon la revendication 1, **caractérisée en ce que** la stratégie de processus de récolte (6a) concerne la minimisation de parts d'oscillations dans l'étendue de hauteur de couche (14) temporelle pour une fréquence d'oscillations prédéterminée ou une plage de fréquence d'oscillations prédéterminée et que le dispositif de calcul (7) génère pour la mise en œuvre de cette stratégie de processus de récolte (6a) au moins la longueur de table de coupe (16) et la spécifie au dispositif de coupe (2).

3. Machine de récolte agricole selon l'une des revendications précédentes, **caractérisée en ce que** l'analyse d'oscillations comporte le calcul d'un coefficient d'oscillations (19) d'une part d'oscillations dans l'étendue de hauteur de couche (14) temporelle pour une fréquence d'oscillations prédéterminée ou une plage de fréquence d'oscillations prédéterminée, de préférence que la stratégie de processus de récolte (6a) comporte une minimisation du coefficient d'oscillations (19) que le dispositif de calcul (7) génère pour la mise en œuvre de cette stratégie de processus de récolte (6a) au moins la longueur de table de coupe (16) et la spécifie au dispositif de coupe (2).

4. Machine de récolte agricole selon la revendication 2 ou 3, **caractérisée en ce que** la fréquence d'oscillations prédéterminée ou la plage de fréquence d'oscillations prédéterminée se trouve entre 0,5 Hz et 10 Hz, en particulier entre 1,0 Hz et 5 Hz.

5. Machine de récolte agricole selon la revendication 3 et éventuellement selon la revendication 4, **caractérisée en ce que** dans le dispositif de calcul (7), au moins un réseau de caractéristiques (6b) est enregistré pour la réalisation du rapport fonctionnel entre le coefficient d'oscillations (19), la longueur de table de coupe (16) et une valeur de débit de marchandises (20) et qu'au moins la longueur de table de coupe (16) est générée sur la base du réseau de caractéristiques (6b), de préférence que la valeur de débit de marchandises (20) est une moyenne temporelle de débit de marchandises.

6. Machine de récolte agricole selon la revendication 5, **caractérisée en ce que** selon le réseau de caractéristiques (6b), le coefficient d'oscillations (19) passe par un minimum lors du passage de la plage de réglage de longueur de table de coupe pour au moins une plage partielle de valeurs de débit de marchandises (20).

7. Machine de récolte agricole selon la revendication 5 ou 6, **caractérisée en ce que** le dispositif de calcul (7) ajuste le réseau de caractéristiques (6b) dans le mode de récolte en cours aux signaux de capteur de l'agencement capteur (9), de préférence qu'un réseau de caractéristiques initial (6c) enregistré dans le dispositif de calcul (7) forme l'état initial du réseau de caractéristiques (6b).

8. Machine de récolte agricole selon l'une des revendications précédentes, **caractérisée en ce que** le dispositif de calcul (7) génère la position de rabatteur (17) horizontale de manière adaptée à la longueur de table de coupe (16) de telle manière que la position de rabatteur (17) horizontale résulte de la longueur de table de coupe (16) dans un rapport prédéterminé, en particulier linéaire.

9. Machine de récolte agricole selon l'une des revendications précédentes, **caractérisée en ce que** le système de capteur de culture (10) présente un capteur de hauteur de culture (24) pour la mesure de la hauteur de culture (13) dans la zone d'approche (12) de la machine de récolte (1) et que le dispositif de calcul (7) génère à partir des signaux de capteur du capteur de hauteur de culture (24) une carte de hauteur de culture pour la zone d'approche (12) de la machine de récolte (1) et génère la position de rabatteur (18) verticale sur la base de la carte de hauteur de culture.

10. Machine de récolte agricole selon la revendication 9, **caractérisée en ce que** le capteur de hauteur de culture (24) est un capteur de distance, en particulier un capteur de distance à base de laser, en outre de préférence un scanner laser.

11. Machine de récolte agricole selon l'une des revendications précédentes, **caractérisée en ce que** le système de capteur de culture (10) présente au moins un capteur de caméra (26) et que le dispositif de calcul (7) élargit la carte de hauteur sur la base des signaux de capteur du capteur de caméra (26).
